# EUROPEAN PATENT APPLICATION

(11) **EP 4 450 372 A1**
(43) Date of publication of application: **23.10.2024**
(21) Application number: 24169857.0
(22) Date of filing: 12.04.2024
(51) Int. Cl.: B62H 5/00, B62H 1/02, B62K 19/40, B62J 45/41, B62J 45/42, E05B 47/00, E05B 71/00

(54) **ELECTRONICALLY CONTROLLED BICYCLE KICKSTAND LOCK**

(30) Priority: 17.04.2023 US 202363496423 P
(71) Applicant: Sinox Company Ltd., New Taipei City (TW)
(72) Inventor: WENG, Chia-Wei, New Taipei City (TW); HUANG, Yueh-Cheng, New Taipei City (TW); LYU, Hao-Jhong, New Taipei City (TW); LIEN, Chi-Liang, New Taipei City (TW)
(74) Representative: Cabinet Chaillot

(57) **Abstract**

An electronically controlled bicycle kickstand lock has an electronic controller (10), a fixing member (20), a kickstand resisting member (30), and a kickstand (40). The fixing member (20) is movable or rotatable under the control of the electronic controller (10). The kickstand resisting member (30) is movable or rotatable and abuts the fixing member (20). The kickstand (40) can rotate and selectively abuts the kickstand resisting member (30). When the fixing member (20) is in the locked state, the lowered kickstand (40) is limited by the kickstand resisting member (30) and cannot be kicked up. Therefore, the kickstand (40) will always be flip-down and tends to lean against the ground when turning. There is no need to carry an independent lock, only through various ways to control the electronic controller (10), making the kickstand (40) able or unable to be kicked up.

## Description

### 1. Field of the Invention

The present invention relates to an electronically controlled bicycle kickstand lock allowing the bicycle kickstand to remain in a flip-down state without being able to be kicked up.

### 2. Description of the Prior Arts

A conventional lock is often used to lock a bicycle to the surrounding environment (e.g., a railing). However, it is inconvenient to prepare the separate lock, especially when the lock has to be carried on the bicycle at all times so that the bicycle can be locked at any time.

In addition, the conventional locks are still insufficient in terms of security; for example, a common lock uses an elastic element to push against a latch tongue to block the element to be fixed. But under this structure, through several strikes at different angles, it is possible to strike to the right angle so that the latch tongue compresses the elastic element and moves away from the element to be fastened. Therefore, it is not difficult for experienced thieves to crack the lock.

To overcome the shortcomings, the present invention provides an electronically controlled bicycle kickstand lock to mitigate or obviate the aforementioned problems.

The main objective of the present invention is to provide an electronically controlled bicycle kickstand lock that can achieve the locking function through the bicycle kickstand without carrying an independent lock.

The electronically controlled bicycle kickstand lock is mounted on a bicycle frame and comprises an electronic controller, a fixing member, a kickstand resisting member, and a kickstand. The fixing member is electrically connected to the electronic controller and is moveable or rotatable to an unlocked state and a locked state under the control of the electronic controller. The kickstand resisting member is moveable or rotatable relative to the bicycle frame and abuts the fixing member. The kickstand is rotatable and comprises a flip-down state and a kicked-up state. The kickstand selectively abuts the kickstand resisting member. When the fixing member moves or rotates to the locked state, the kickstand is located in the flip-down state and is unable to enter the kicked-up state due to the kickstand resisting member. When the fixing member moves or rotates to the unlocked state, the kickstand resisting member allows the kickstand to be rotated to the kicked-up state.

The advantage of the present invention is to achieve the anti-theft function by using the kickstand of the bicycle. When the fixing member is in the locked state, the kickstand is located in the flip-down state, and the kickstand is limited by the kickstand resisting member and cannot be kicked up. Therefore, the kickstand will always be in the flip-down state, so that the kickstand is not only inconvenient to ride but also tends to lean against the ground when turning, so as to achieve the anti-theft effect. And there is no need to use or carry an independent lock, only through various ways (e.g. mobile application) to control the electronic controller, making the kickstand unable or able to be kicked up.

In addition, the kickstand resisting member always abuts the fixing member, as long as the electronic controller does not move or rotate the fixing member to change to the unlocked state, the kickstand resisting member will not be able to move or rotate further because abutting the fixing member, and therefore the kickstand resisting member will remain in a state that prevents the kickstand from rotating and kicking up. Therefore, no matter from how many angles the thief strikes the present invention, the kickstand resisting member cannot be further moved or rotated, and the kickstand cannot be kicked up, so it can achieve the anti-theft effect.

Other objectives, advantages and novel features of the invention will become more apparent from the following detailed description when taken in conjunction with the accompanying drawings.

### IN THE DRAWINGS

Fig. 1 is a schematic view of an electronically controlled bicycle kickstand lock mounted on the bicycle in accordance with the present invention;
Fig. 2 is a perspective view of the electronically controlled bicycle kickstand lock in Fig. 1;
Fig. 3 and Fig. 4 are exploded views of the electronically controlled bicycle kickstand lock in Fig. 1;
Fig. 5 is a cross-sectional view of the electronically controlled bicycle kickstand lock in Fig. 1;
Fig. 6 to Fig. 8 are operational schematic views of the electronically controlled bicycle kickstand lock in Fig. 1;
Fig. 9 is an exploded view of a bicycle frame retaining seat of the electronically controlled bicycle kickstand lock in Fig. 1;
Fig. 10 is a schematic view of a sensor of the electronically controlled bicycle kickstand lock in Fig. 1; and
Fig. 11 and Fig. 12 are operational schematic views of the sensor of the electronically controlled bicycle kickstand lock in Fig. 1.

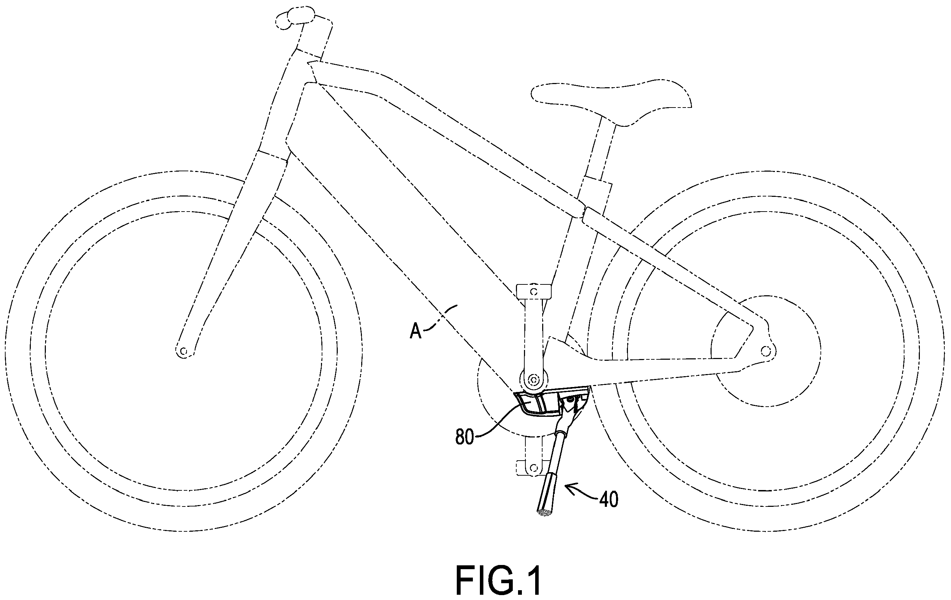

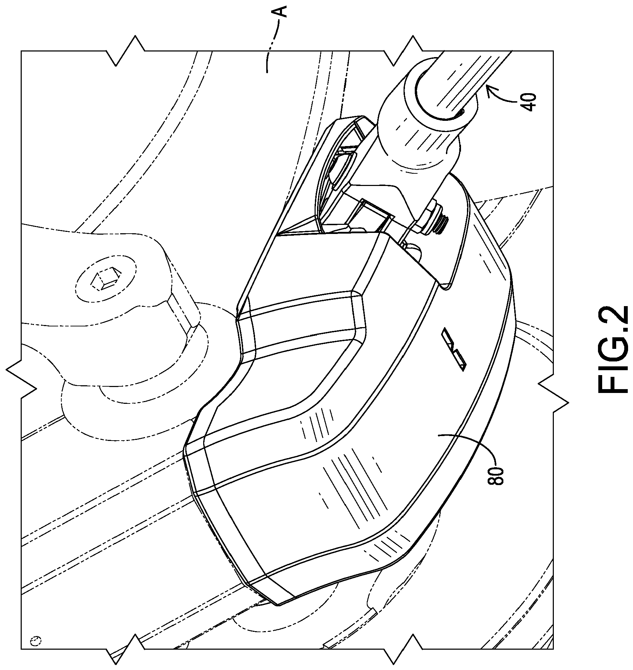

With reference to Fig. 1 and Fig. 2, an electronically controlled bicycle kickstand lock in accordance with the present invention is configured to be mounted on a bicycle frame A and is preferably located on the bicycle frame A corresponding to the pedal axle, but it is not limited thereto. The electronically controlled bicycle kickstand lock can also be installed in other positions of the bicycle frame A, for example, at the axle of the wheels, as long as the kickstand 40 contacts the ground.

With reference to Fig. 2 to Fig. 4, the electronically controlled bicycle kickstand lock comprises an electronic controller 10, a fixing member 20, a kickstand resisting member 30 and a kickstand 40 and preferably further comprises an elastic element 50, a slide rail 60, a bicycle frame retaining seat 70 and a casing 80.

In this embodiment, the electronic controller 10 is mounted on the bicycle frame retaining seat 70. The kickstand 40 is pivotably mounted on the bicycle frame retaining seat 70. The bicycle frame retaining seat 70 is configured to be mounted on the bicycle frame, whereby the entire electronically controlled bicycle kickstand lock is modularized, and the invention can be mounted directly on the bicycle frame without having to separately install the electronic controller 10 and the kickstand 40. However, it is not limited thereto, as the electronic controller 10 and the kickstand 40 can be individually mounted on the bicycle frame, or the electronic controller 10, the fixing member 20 and the kickstand resisting member 30 can be mounted on an existing bicycle with a kickstand 40 to form the present invention.

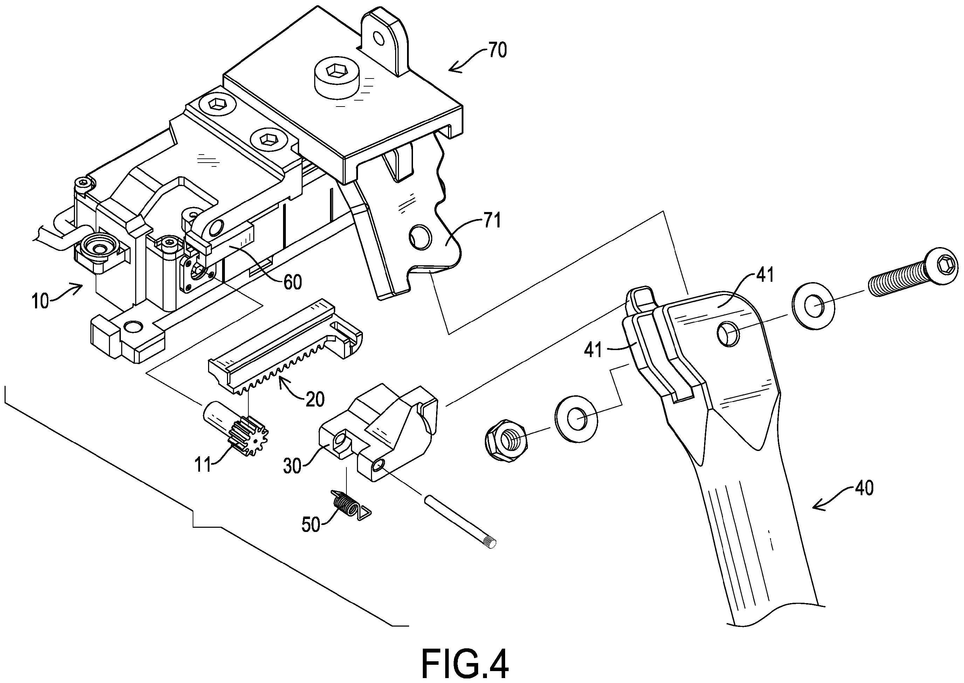

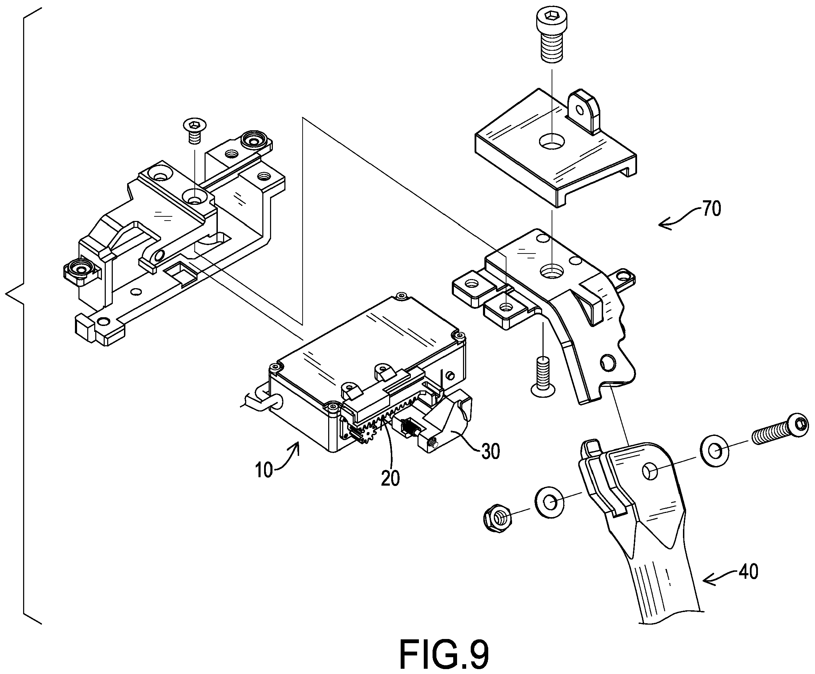

With reference to Fig. 4 and Fig. 9, in this embodiment, the bicycle frame retaining seat 70 is a combination of several components, but it is not limited thereto, as the bicycle frame retaining seat 70 can be a single component.

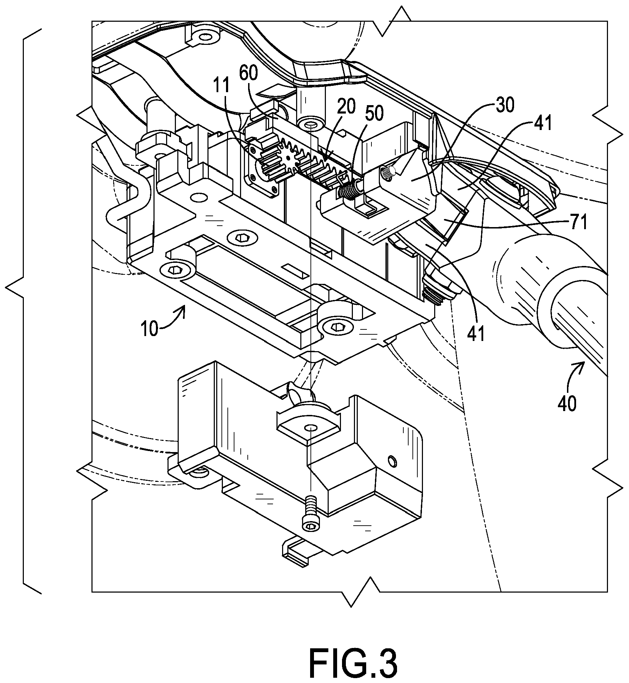

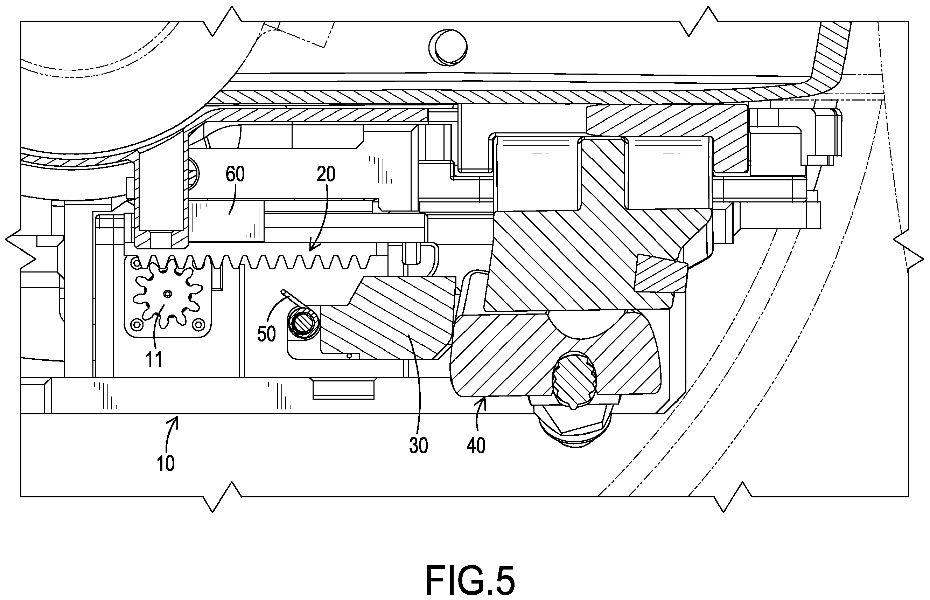

With reference to Fig. 3 to Fig. 6, in a preferable embodiment, the aforementioned electronic controller 10 comprises a controller area network bus (CAN bus) and a Bluetooth low energy (BLE) system, and also can comprise a Global Positioning System (GPS). Therefore, the electronic controller 10 may be controlled via wired or wireless methods preferably via a mobile application.

The aforementioned fixing member 20 is electrically connected to the electronic controller 10. The aforementioned fixing member 20 can be moved or rotated to an unlocked state and a locked state under the control of the electronic controller 10. In this embodiment, the fixing member 20 is a rack, the electronic controller 10 is a motor (preferably a servomotor or a stepper motor) and engages the rack with a gear 11, so that the rack can move to an unlocked state and a locked state relative to the electronic controller 10. However, the structure of the fixing member 20 and the way in which the electronic controller 10 drives the fixing member 20 is not limited thereto, for example, the electronic controller 10 can also drive the fixing member 20 to rotate through a motor, as long as the fixing member 20 can switch between two positions (the unlocked state and the locked state).

The aforementioned slide rail 60 is connected to the electronic controller 10 and preferably is mounted on the electronic controller 10. The slide rail 60 extends along the movement direction of the fixing member 20 and allows the fixing member 20 to be movably engaged with the slide rail 60, thereby stabilizing the movement of the fixing member 20.

The aforementioned kickstand resisting member 30 can be moved or rotated relative to the bicycle frame and abuts the fixing member 20. In this embodiment, the kickstand resisting member 30 is mounted on the electronic controller 10, and the kickstand resisting member 30 can be rotated relative to the bicycle frame and the electronic controller 10, but it is not limited thereto. The kickstand resisting member 30 can be mounted on the bicycle frame or the other component and can also be changed to move relative to the bicycle frame.

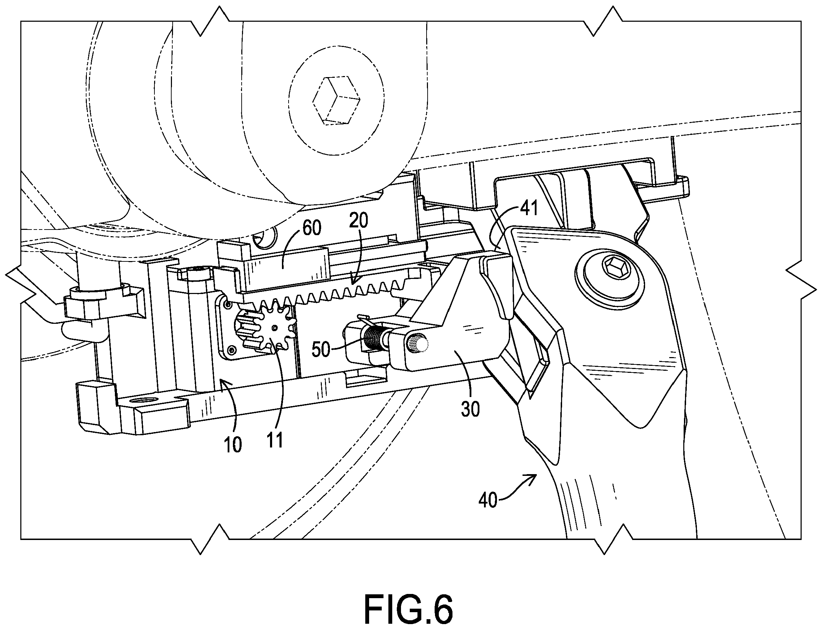

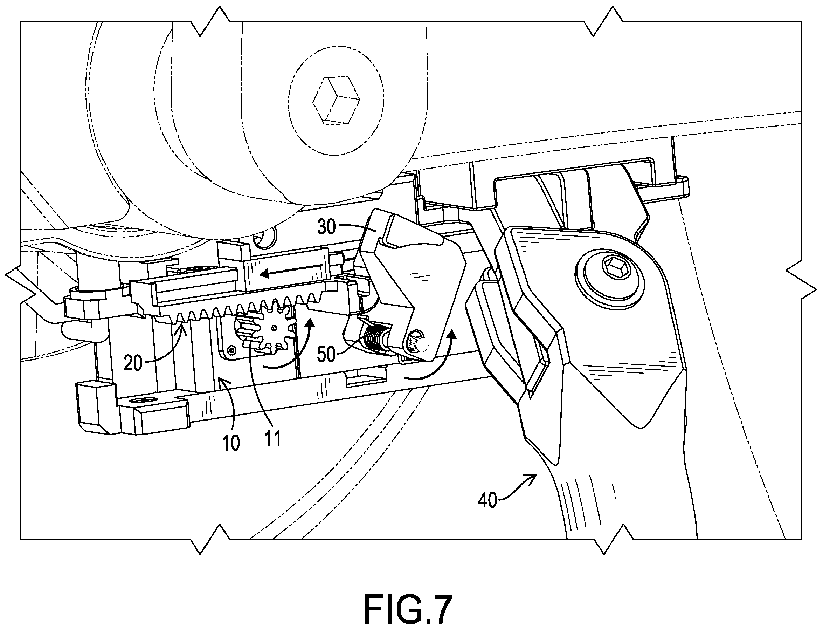

With reference to Fig. 6 and Fig. 7, preferably, when the fixing member 20 moves or rotates, the kickstand resisting member 30 will move or rotate with the fixing member 20 to remain against the fixing member 20, which in this embodiment is accomplished by an elastic element 50. The elastic element 50 presses against the kickstand resisting member 30 toward the fixing member 20, so that the kickstand resisting member 30 remains against the fixing member 20, but it is not limited thereto. The kickstand resisting member 30 can also be moved or rotated along with the fixing member 20 in other ways, such as by magnetic attraction to allow the fixing member 20 to move the kickstand resisting member 30.

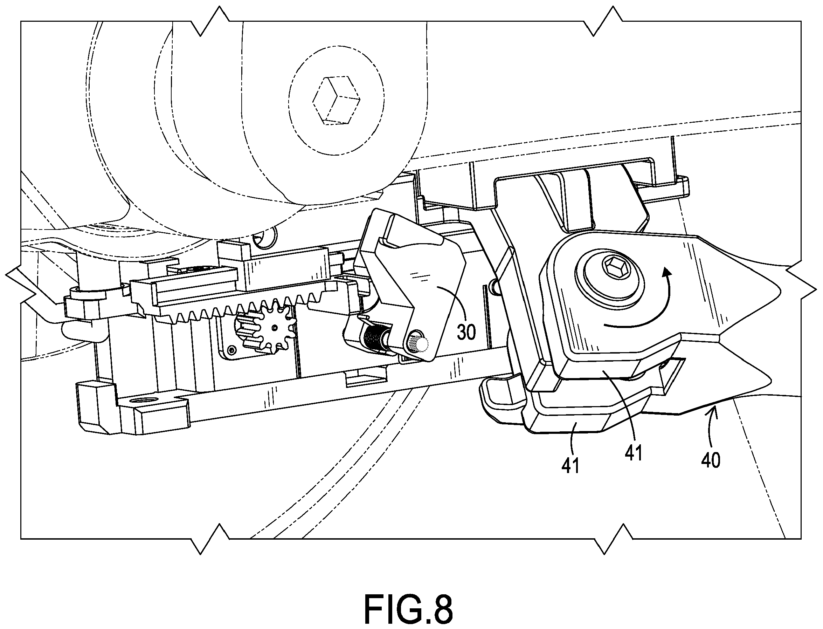

With reference to Fig. 4 to Fig. 8, the aforementioned kickstand 40 can rotate and has a flip-down state and a kicked-up state, and the kickstand 40 selectively abuts the kickstand resisting member 30. The flip-down state means the state in which the kickstand 40 can be placed against the ground so that the bicycle is supported, and the kicked-up state means the state in which the kickstand 40 can be kicked up without interfering with the riding of the bicycle.

When the fixing member 20 moves or rotates to the locked state, the kickstand 40 is only located in the flip-down state and is limited by the kickstand resisting member 30 from rotating to the kicked-up state (as shown in Fig. 6). In this embodiment, the top end of the kickstand 40 will abut the kickstand resisting member 30 and will prevent the kickstand 40 from rotating in the flip-down state.

When the fixing member 20 moves or rotates to the unlocked state, the kickstand resisting member 30 allows the kickstand 40 to rotate to the kicked-up state (as shown in Fig. 7). In this embodiment, when the rack (fixing member 20) moves away from the kickstand 40 to the unlocked state, the elastic element 50 further pushes the kickstand resisting member 30 (to remain against the fixing member 20), so that the kickstand resisting member 30 is no longer against the kickstand 40, and therefore the kickstand 40 can be kicked up.

In this embodiment, the kickstand resisting member 30 and the pivot axis between the bicycle frame are not parallel with the pivot axis, so that the kickstand 40 is tilted outward relative to the bicycle frame, but it is not limited thereto.

With reference to Fig. 3 to Fig. 5, a pivotal piece 71 protrudes from the bicycle frame retaining seat 70, and two pivotal blocks 41 protrude from the top of the kickstand 40. The pivotal piece 71 is pivotably mounted between the two pivotal blocks 41. When the fixing member 20 moves or rotates to the locked state, the two pivotal blocks 41 both abut the fixing member 20 so that the kickstand 40 cannot be rotated to the kicked-up state. The pivot structure is more secure by allowing the two pivotal blocks 41 to clamp the pivotal piece 71. The kickstand 40 is more securely prevented from rotating by allowing both the pivotal block 41 on either side of the pivotal piece 71 to abut the fixing member 20. In particular, the kickstand 40 is not only to support the bicycle but also to be used for anti-theft purposes, so it is more important to strengthen the stability of preventing the rotation of the kickstand 40.

With reference to Fig. 2 and Fig. 3, the aforementioned casing 80 is configured to be mounted on the bicycle frame, and covers the electronic controller 10, the fixing member 20 and the kickstand resisting member 30 with the bicycle frame. In other words, generally only the kickstand 40 is exposed, so as to protect the main components from dust and water, for example, to avoid gravel affecting the meshing of the gear 11 and the rack.

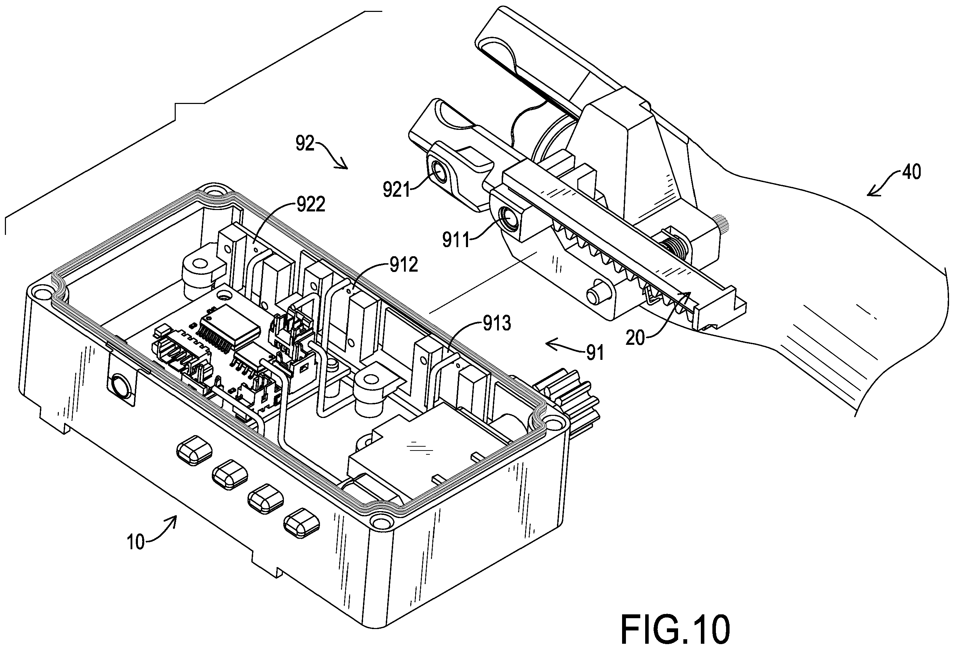

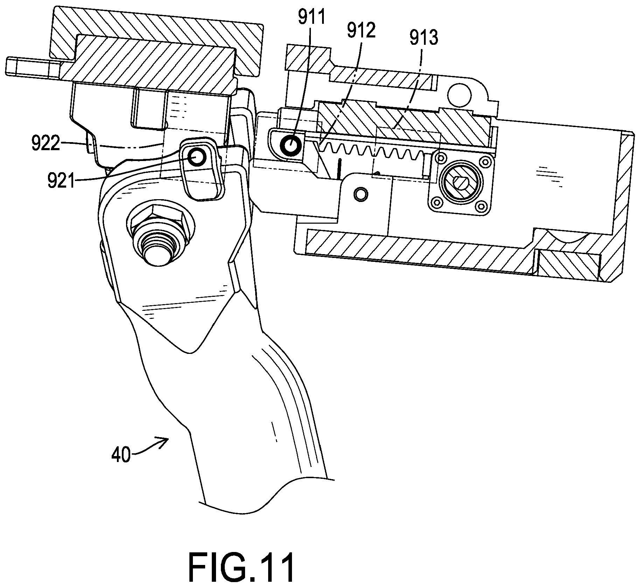

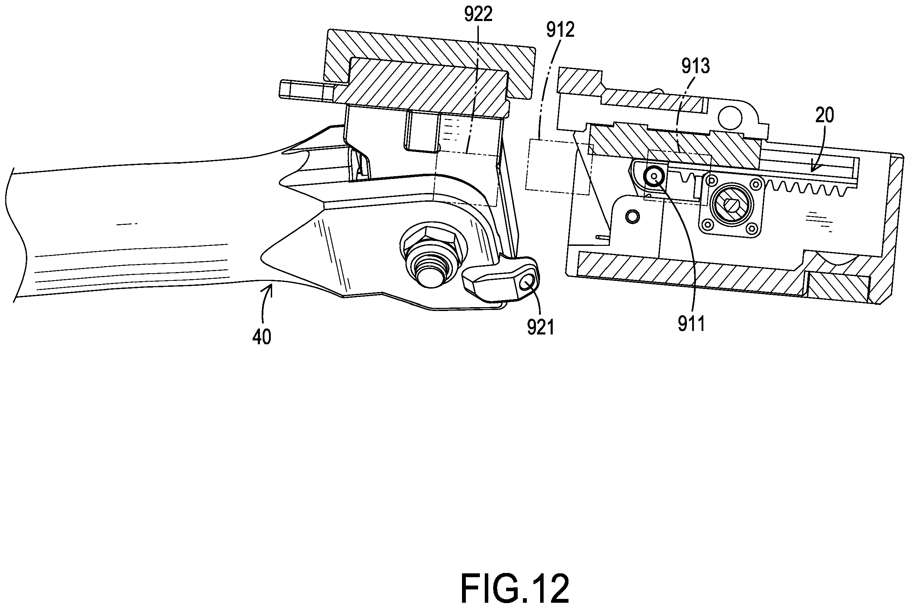

With reference to Fig. 10 to Fig. 12, in this embodiment, the electronically controlled bicycle kickstand lock further comprises a fixing member sensor 91 and a kickstand sensor 92. The fixing member sensor 91 and the kickstand sensor 92 are both electrically connected to the electronic controller 10.

The fixing member sensor 91 is configured to sense whether the fixing member 20 is in the locked state and preferably also sense whether the fixing member 20 is in the unlocked state. In this embodiment, a fixing member magnet 911 is mounted on the fixing member 20, and a lock sensor 912 and an unlock sensor 913 are mounted on the electronic controller 10. When the fixing member 20 is in the locked state, the lock sensor 912 senses the fixing member magnet 911, and the electronic controller 10 learns that the fixing member 20 is in the locked state. When the fixing member 20 is in the unlocked state, the unlock sensor 913 senses the fixing member magnet 911, and the electronic controller 10 learns that the fixing member 20 is in the unlocked state.

The kickstand sensor 92 is configured to sense whether the kickstand 40 is in the flip-down state. In this embodiment, a kickstand magnet 921 is mounted on the top of the kickstand 40, and a lowered sensor 922 is mounted on the electronic controller 10. When the kickstand 40 is in the flip-down state, the lowered sensor 922 senses the kickstand magnet 921, and the electronic controller 10 learns that the kickstand 40 is in the flip-down state. Conversely, when the lowered sensor 922 does not sense the kickstand magnet 921, the electronic controller 10 learns that the kickstand may have been kicked up.

The lock sensor 912, the unlock sensor 913 and the lowered sensor 922 are preferably, but not limited to, Hall sensors. The specific constructions and mounting positions of the fixing member sensor 91 and the kickstand sensor 92 can be changed arbitrarily.

The advantage of the present invention is to achieve the anti-theft function by using the kickstand 40 of the bicycle. When the fixing member 20 is in the locked state, the kickstand 40 cannot be kicked up and will always be in the flip-down state, so that the kickstand is not only inconvenient to ride but also tends to lean against the ground when turning, so as to achieve the anti-theft effect. There is no need to use or carry an independent lock, only through various ways to control the electronic controller 10, making the kickstand 40 able or unable to be kicked up.

In addition, the kickstand resisting member 30 always abuts the fixing member 20, as long as the electronic controller 10 does not change the fixing member 20 to the unlocked state, the kickstand resisting member 30 will not be able to further move or rotate to avoid the kickstand 40, and thus the kickstand 40 will be limited by the kickstand resisting member 30 and will not be able to be kicked up. Therefore, no matter from how many angles the thief strikes the present invention, the kickstand resisting member 30 cannot be further moved or rotated, and the kickstand 40 cannot be kicked up, so it can achieve the anti-theft effect.

## Claims

1. An electronically controlled bicycle kickstand lock adapted to be mounted on a bicycle frame (A), and **characterized in that** the electronically controlled bicycle kickstand lock comprises:
an electronic controller (10);
a fixing member (20) electrically connected to the electronic controller (10) and being moveable or rotatable to an unlocked state and a locked state under the control of the electronic controller (10);
a kickstand resisting member (30) being moveable or rotatable relative to the bicycle frame (A) and abutting the fixing member (20);
a kickstand (40) being rotatable, having a flip-down state and a kicked-up state, and selectively abutting the kickstand resisting member (30);
wherein when the fixing member (20) moves or rotates to the locked state, the kickstand (40) is located in the flip-down state and is unable to enter the kicked-up state due to the kickstand resisting member (30);
wherein when the fixing member (20) moves or rotates to the unlocked state, the kickstand resisting member (30) allows the kickstand (40) to be rotated to the kicked-up state.

2. The electronically controlled bicycle kickstand lock as claimed in claim 1 further including an elastic element (50), the elastic element (50) pushing the kickstand resisting member (30) towards the fixing member (20) such that the kickstand resisting member (30) abuts the fixing member (20).

3. The electronically controlled bicycle kickstand lock as claimed in claim 1 or 2, wherein the fixing member (20) is a rack, the electronic controller (10) engages the rack with a gear, and the rack is moveable to the unlocked state or the locked state relative to the electronic controller (10).

4. The electronically controlled bicycle kickstand lock as claimed in claim 3 further including a slide rail (60) connected to the electronic controller (10), and the fixing member (20) movably embedded in the slide rail (60).

5. The electronically controlled bicycle kickstand lock as claimed in claim 1 or 2, wherein the kickstand resisting member (30) is rotatable relative to the bicycle frame (A), and a pivot axis between the kickstand resisting member (30) and the bicycle frame (A) is non-parallel with the pivot axis.

6. The electronically controlled bicycle kickstand lock as claimed in claim 1 or 2 further including a bicycle frame retaining seat (70) configured to be mounted on the bicycle frame (A), the electronic controller (10) mounted on the bicycle frame retaining seat (70), and the kickstand (40) pivotably mounted on the bicycle frame retaining seat (70).

7. The electronically controlled bicycle kickstand lock as claimed in claim 6, wherein
the bicycle frame retaining seat (70) comprises a pivotal piece (71);
the pivotal piece (71) protrudes from the bicycle frame (A), the kickstand (40) comprises two pivotal blocks protruding from the top of the kickstand (40); the pivotal piece (71) is pivotably mounted between the two pivotal blocks;
when the fixing member (20) moves or rotates to the locked state, and the two pivotal blocks abut the fixing member (20) and are unable to rotate to the kicked-up state.

8. The electronically controlled bicycle kickstand lock as claimed in claim 1 or 2 further including a casing (80) configured to be mounted on the bicycle frame (A), and the casing (80) and the bicycle frame (A) cover the electronic controller (10), the fixing member (20), and the kickstand resisting member (30).

9. The electronically controlled bicycle kickstand lock as claimed in claim 1 or 2 further including a kickstand sensor (92) electrically connected to the electronic controller (10), and the kickstand sensor (92) configured to sense whether the kickstand (40) is in the flip-down state.

10. The electronically controlled bicycle kickstand lock as claimed in claim 1 or 2 further including a fixing member sensor (91) electrically connected to the electronic controller (10), and the fixing member sensor (91) configured to sense whether the fixing member (20) is in the locked state.
